# EUROPEAN PATENT APPLICATION

(11) **EP 4 541 943 A1**
(43) Date of publication of application: **23.04.2025**
(21) Application number: 23827194.4
(22) Date of filing: 20.06.2023
(51) Int. Cl.: C25B 11/081, B01J 23/60, B01J 23/648, B01J 23/89, C25B 1/46, C25B 9/00, C25B 11/052

(54) **ELECTROLYSIS ELECTRODE AND ELECTROLYSIS TANK**

(30) Priority: 20.06.2022 JP 2022098944; 07.04.2023 JP 2023062983
(71) Applicant: Asahi Kasei Kabushiki Kaisha, Tokyo 1000006 (JP)
(72) Inventor: FURUKAWA, Seiichi, Tokyo 100-0006 (JP); MIYASAKA, Toyomitsu, Tokyo 100-0006 (JP); FUNAKAWA, Akiyasu, Tokyo 100-0006 (JP); YAMASHITA, Takuya, Tokyo 100-0006 (JP)
(74) Representative: dompatent von Kreisler Selting Werner - Partnerschaft von Patent- und Rechtsanwälten mbB
(86) International application number: PCT/JP2023/022751
(87) International publication number: WO 2023/249011

(57) **Abstract**

An electrode for electrolysis, including:
a conductive substrate; and
a catalyst layer disposed on a surface of the conductive substrate,
in which at least one of the following conditions (I) and (II) is satisfied:
(I) the catalyst layer contains a ruthenium element and an iridium element, and a crystallite size is 50 Å or more and 100 Å or less, the crystallite size being calculated from a peak observed in a 2θ range of 27° or more and 28.5° or less in an XRD spectrum, the XRD spectrum being obtained by subjecting the catalyst layer to X-ray diffraction measurement and
(II) the catalyst layer contains (i) a ruthenium element, (ii) an iridium element, and (iii) at least one kind of metal element M selected from the group consisting of W, Zn, Mn, Cu, Co, V, Ga, Ta, Ni, Fe, Mo, Nb and Zr, in the catalyst layer, a molar ratio of the ruthenium element to the iridium element, in terms of ruthenium element/iridium element, is 1.4 or more, and a molar ratio of the metal element M to the ruthenium element, in terms of metal element M/ruthenium element, is 0.06 or more and 3.5 or less.

## Description

### Technical Field

The present invention relates to an electrode for electrolysis and an electrolyzer.

### Background Art

Chlor-alkali electrolysis by an ion exchange membrane method refers to a method for producing caustic soda, chlorine, and hydrogen by electrolyzing brine using an electrode for electrolysis. In a chlor-alkali electrolysis process by the ion exchange membrane method, there is a demand for a technique enabling a low electrolysis voltage to be maintained for a long period of time to reduce the power consumption. As one example of such a technique, in Patent Literature 1, an electrode for electrolysis including a conductive substrate and a catalyst layer formed on a surface of the conductive substrate, in which the catalyst layer contains a ruthenium element, an iridium element, a titanium element, and at least one kind of first transition metal element selected from the group consisting of Sc, V, Cr, Fe, Co, Ni, Cu, and Zn, the content proportion of the first transition metal element contained in the catalyst layer based on 1 mole of the titanium element is 0.25 mol% or more and less than 3.4 mol%, and the D value being an index of the electric double layer capacitance of the electrode for electrolysis is 120 C/m² or more and 420 C/m² or less.

### Citation List

### Patent Literature

Patent Literature 1: Japanese Patent No. 6670948

### Summary of Invention

### Technical Problem

The electrode for electrolysis described in Patent Literature 1 is capable of reducing overpotential in the initial stage of electrolysis and enables electrolysis at a low voltage and a low power consumption for a long period of time. On the other hand, according to the present inventors' additional studies, it has been clarified that, for the electrode for electrolysis described in Patent Literature 1, there is room for improvement from the viewpoint of further improving durability that is based on the blending ratio between the ruthenium element and the iridium element.

The present invention has been made in consideration of the above-described circumstance, and an object of the present invention is to provide an electrode for electrolysis or the like having excellent durability and electrolysis performance.

### Solution to Problem

As a result of intensive studies, the present inventors have found that the above-described problem can be solved by an electrode for electrolysis in which a predetermined crystallite size that is calculated regarding a catalyst layer is within a predetermined range and completed the present invention.

That is, the present invention includes the following aspects.
[1] An electrode for electrolysis, comprising:
   a conductive substrate; and
   a catalyst layer that is disposed on a surface of the conductive substrate,
   wherein at least one of the following conditions (I) and (II) is satisfied:
      (I) the catalyst layer comprises a ruthenium element and an iridium element, and a crystallite size is 50 Å or more and 100 Å or less, the crystallite size being calculated from a peak observed in a 2θ range of 27° or more and 28.5° or less in an XRD spectrum, the XRD spectrum being obtained by subjecting the catalyst layer to X-ray diffraction measurement, and
      (II) the catalyst layer comprises (i) a ruthenium element, (ii) an iridium element, and (iii) at least one kind of metal element M selected from the group consisting of W, Zn, Mn, Cu, Co, V, Ga, Ta, Ni, Fe, Mo, Nb and Zr, in the catalyst layer, a molar ratio of the ruthenium element to the iridium element, in terms of ruthenium element/iridium element, is 1.4 or more, and a molar ratio of the metal element M to the ruthenium element, in terms of metal element M/ruthenium element, is 0.06 or more and 3.5 or less.
[2] The electrode for electrolysis according to [1], wherein the condition (II) is satisfied.
[3] The electrode for electrolysis according to [2], wherein a crystallite size is 50 Å or more and 100 Å or less, the crystallite size being calculated from a peak observed in a 2θ range of 27° or more and 28.5° or less in an XRD spectrum, the XRD spectrum being obtained by subjecting the catalyst layer to X-ray diffraction measurement.
[4] The electrode for electrolysis according to [2] or [3], wherein the metal element M comprises Zn, Mn, Cu, Co, V, Ga, Ni, Fe, and/or Nb.
[5] The electrode for electrolysis according to [1], wherein the condition (I) is satisfied.
[6] The electrode for electrolysis according to [5], wherein, in the catalyst layer, a molar ratio of the ruthenium element to the iridium element, in terms of ruthenium element/iridium element, is 1.4 or more.
[7] The electrode for electrolysis according to [5] or [6], wherein the catalyst layer comprises the metal element M, and, in the catalyst layer, a molar ratio of the metal element M to the ruthenium element, in terms of metal element M/ruthenium element, is 0.05 or more and 3.5 or less.
[8] The electrode for electrolysis according to any of [5] to [7], wherein the metal element M comprises Zn, Mn, Cu, Co, V, Ga, Ni, Fe, and/or Nb.
[9] An electrolyzer comprising:
   the electrode for electrolysis according to any of [1] to [8].

### Advantageous Effect of Invention

The present invention makes it possible to provide an electrode for electrolysis or the like having excellent durability and electrolysis performance.

### Brief Description of Drawing

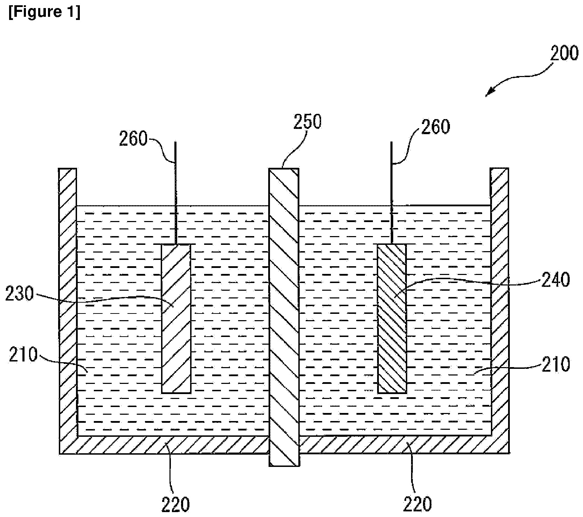

[Figure 1] Figure 1 shows a schematic cross-sectional view according to one example of an electrolyzer of the present embodiment.

### Description of Embodiment

Hereinafter, an aspect for carrying out the present invention (in the present specification, also referred to as "the present embodiment") will be described in detail. The present embodiment below is an example for describing the present invention, but does not intend to limit the present invention to the following contents. The present invention can be carried out after being appropriately modified within the scope of the gist thereof.

### <Electrode for Electrolysis>

An electrode for electrolysis of the present embodiment includes a conductive substrate and a catalyst layer disposed on a surface of the conductive substrate, and at least one of the following conditions (I) and (II) is satisfied:
(I) the catalyst layer contains a ruthenium element and an iridium element, and a crystallite size is 50 Å or more and 100 Å or less, the crystallite size being calculated from a peak observed in a 2θ range of 27° or more and 28.5° or less in an XRD spectrum, the XRD spectrum being obtained by subjecting the catalyst layer to X-ray diffraction measurement, and
(II) the catalyst layer contains (i) a ruthenium element, (ii) an iridium element, and (iii) at least one kind of metal element M selected from the group consisting of W, Zn, Mn, Cu, Co, V, Ga, Ta, Ni, Fe, Mo, Nb and Zr, in the catalyst layer, a molar ratio of the ruthenium element to the iridium element, in terms of ruthenium element/iridium element, is 1.4 or more, and a molar ratio of the metal element M to the ruthenium element, in terms of metal element M/ruthenium element, is 0.06 or more and 3.5 or less.

The electrode for electrolysis of the present embodiment is configured as described above and is thus excellent in terms of durability and electrolysis performance. The electrode for electrolysis of the present embodiment may satisfy condition (I) alone or condition (II) alone, but preferably satisfies at least condition (II) and more preferably satisfies both conditions (I) and (II).

### (Conductive Substrate)

The electrode for electrolysis of the present embodiment includes a conductive substrate. The material of the conductive substrate is not particularly limited as long as the material is a conductive material, a variety of known materials can be employed, and particularly, a valve metal is preferable. In the case of using a valve metal, there is a tendency that the corrosion resistance of the electrode for electrolysis improves, and the valve metal can be preferably used particularly in a saline solution having a high concentration that is close to saturation or in an atmosphere where chlorine gas is generated. While not limited to the followings, examples of the valve metal include titanium, tantalum, niobium, zirconium, and the like. Titanium is preferable from the viewpoint of the economic efficiency and the affinity to the catalyst layer.

The shape of the conductive substrate is also not particularly limited, and an appropriate shape can be selected depending on the intended use. For example, shapes such as an expanded shape, a perforated plate, and a wire mesh are preferably used. The thickness of the conductive substrate is preferably 0.1 to 2 mm.

On the contact surface with the catalyst layer in the conductive substrate, it is preferable to perform a surface area-increasing treatment to improve the adhesion to the catalyst layer. While not limited to the followings, examples of a method for the surface area-increasing treatment include blasting treatments in which a cut wire, a steel grid, or an alumina grid is used; acid treatments in which sulfuric acid or hydrochloric acid is used; and the like. Among these treatments, a method in which unevenness is formed on the surface of the conductive substrate by a blasting treatment and an acid treatment is then further performed is preferable.

### (Catalyst Layer)

The electrode for electrolysis of the present embodiment includes a catalyst layer that is disposed on the surface of the conductive substrate. The catalyst layer contains a ruthenium element and an iridium element as essential elements. In addition, the catalyst layer may arbitrarily contain other elements.

The ruthenium element functions as a main catalyst, and the iridium element contributes to durability.

The ruthenium element and the iridium element are each preferably in an oxide form. While not limited to the followings, examples of ruthenium oxides include RuO₂ and the like. While not limited to the followings, examples of iridium oxides include IrO₂ and the like.

In the catalyst layer, the existence states of the ruthenium element and the iridium element are not particularly limited, but the ruthenium oxide and the iridium oxide are preferably solid solutions.

In the catalyst layer, the content ratio (molar ratio) of the ruthenium element to the iridium element, in terms of ruthenium element/iridium element, is preferably 1.4 or more. When the content ratio of two kinds of elements is set within the above-described range, there is a tendency that the long-term durability of the electrode for electrolysis further improves. In addition, from the viewpoint of both the voltage and durability of the catalyst layer, the content ratio, in terms of ruthenium element/iridium element, is more preferably 1.4 or more and 120 or less, still more preferably 1.4 or more and 100 or less, even more preferably 1.4 or more and 60 or less, even still more preferably 1.4 or more and 30 or less, and even further still more preferably 1.4 or more and 20 or less.

On the other hand, from the viewpoint of the economic efficiency, the content ratio, in terms of ruthenium element/iridium element, is more preferably 2.2 or more, still more preferably 2.5 or more, and far still more preferably 2.6 or more.

In addition, from the same viewpoint as described above, the content ratio of other elements (elements other than the ruthenium element and the iridium element), in terms of other element/iridium element, is preferably 0.1 or more and 25 or less, more preferably 0.1 or more and less than 15, and more preferably 0.1 or more and less than 8.0. Iridium, ruthenium, and other elements may be each contained in the catalyst layer in a form other than oxides, for example, a pure metal.

In the present embodiment, from the viewpoint of both the voltage and durability of the catalyst layer, as the other elements, at least one kind of metal element M selected from the group consisting of W, Zn, Mn, Cu, Co, V, Ga, Ta, Ni, Fe, Mo, Nb and Zr is preferably contained, as the metal element M, Zn, Mn, Cu, Co, V, Ga, Ni, Fe, and/or Nb is more preferably contained, Zn, Cu, Co, V, Ga, Ni, and/or Fe is still more preferably contained, and Zn, Cu, and/or V is far still more preferably contained.

In the present embodiment, from the viewpoint of both the voltage and durability of the catalyst layer, the catalyst layer further contains the metal element M, and the molar ratio of the metal element M to the ruthenium element, in terms of metal element M/ruthenium element, is preferably 0.05 or more and 3.5 or less, more preferably 0.06 or more and 3.5 or less, still more preferably 0.1 or more and 3.5 or less, far still more preferably 0.1 or more and 0.6 or less, and even far still more preferably 0.1 or more and 0.2 or less. In a case where V is contained as the metal element M, the molar ratio of V to the ruthenium element, in terms of V/ruthenium element, is preferably 0.05 or more and 0.15 or less, and more preferably 0.05 or more and 0.1 or less.

In the present embodiment, while not limited to the followings, as the other elements, aside from what has been described above, for example, tin, platinum, rhodium, and the like may be contained. As the existence forms, these metal elements may exist as, for example, metal elements that are contained in oxides. In a case where the catalyst layer in the present embodiment contains tin, platinum, and/or rhodium, the total amount thereof is preferably 20 mol% or less and more preferably 10 mol% or less in terms of the molar ratio of these metal elements to all metal elements that are contained in the catalyst layer.

In the present embodiment, the crystallite size is preferably 50 Å or more and 100 Å or less, the crystallite size being calculated from a peak observed in a 2θ range of 27° or more and 28.5° or less in an XRD spectrum, the XRD spectrum being obtained by subjecting the catalyst layer to X-ray diffraction measurement. The crystallite size can be said to be an index indicating whether or not ruthenium and iridium have dispersed in the entire catalyst layer as appropriate crystals. Specifically, in the 2θ range of 27° or more and 28.5° or less, when peaks derived from the (110) plane of RuO₂ and the (110) plane of IrO₂ are observed, there is a tendency that, as the half widths of such peaks become narrower, the crystallite size becomes larger.

In a case where the crystallite size is 50 Å or more, it is possible to appropriately increase the degrees of crystallization of ruthenium and iridium, and there is thus a tendency that the durability is secured. In addition, in a case where the crystallite size is 100 Å or less, it is possible to make the crystals of ruthenium and iridium appropriately small, and in this case, there is a tendency that it is possible to prevent the deterioration of the durability of the entire catalyst layer that arises from, for example, separation from the other elements being excessively large or the like. In the electrode for electrolysis of the present embodiment, in a case where the crystallite size is 50 Å or more and 100 Å or less, the degrees of crystallization of ruthenium and iridium are preferably controlled, and as a result, there is a tendency that, even in a case where the amount of iridium, which contributes to durability, is reduced, high durability can be developed. While not intended to be limited to the following, according to the present inventors' studies, the action mechanism thereof is presumed as described below.

In the electrode for electrolysis of the present embodiment, in a case where the crystallite size is controlled to be within a predetermined range, it is considered that, in the catalyst layer, at least the ruthenium element and the iridium element disperse in the same manner and are likely to be uniformly mixed together. Particularly, it is considered that ruthenium, which is the main catalyst, and iridium, which imparts durability, are uniformly mixed together in the catalyst layer, whereby each element develops performance at a higher efficiency and the electrode for electrolysis is capable of realizing high durability while maintaining a low overpotential.

From the same viewpoint as described above, the crystallite size is preferably 50 Å or more and 100 Å or less and more preferably 60 Å or more and 95 Å or less.

The crystallite size can be measured based on a method to be described in Examples, which will be described below.

The crystallite size can be adjusted to the above-described range by, for example, adjusting the molar ratio of the ruthenium element to the iridium element to the above-described preferable range, adjusting the molar ratio of the metal element M to the ruthenium element to the above-described preferable range, and/or the like. From the viewpoint of adjusting the crystallite size, while not limited to the followings, specifically, for example, the molar ratio of the ruthenium element to the iridium element may be adjusted to 1.4 or more and 9.0 or less, and the molar ratio of the metal element M to the ruthenium element may be adjusted to 0.06 or more and 3.5 or less. In addition, the crystallite size can also be adjusted with, for example, the amounts of the ruthenium element, the iridium element, and the metal element M occupying the catalyst layer. For example, from the viewpoint of setting the crystallite size to 50 Å or more and 100 Å or less, when all of the metal elements that are contained in the catalyst layer are set to 100 mass%, the total amount of the ruthenium element, the iridium element, and the metal element M is preferably more than 70 mass% and more preferably 100 mass%.

The thickness of the catalyst layer in the present embodiment is preferably 0.1 to 5 µm and more preferably 0.5 to 3 µm. When the thickness of the catalyst layer is set to the above-described lower limit value or more, there is a tendency that it is possible to sufficiently maintain the initial electrolysis performance. In addition, when the thickness of the catalyst layer is set to the above-described upper limit value or less, there is a tendency that an electrode for electrolysis having an excellent economic efficiency can be obtained.

The catalyst layer may be composed of only a single layer or may be two or more layers.

In a case where the catalyst layer is two or more layers, at least one layer thereof needs to satisfy at least one of conditions (I) and (II). In a case where the catalyst layer is two or more layers, it is possible to make, for example, at least one layer correspond to the catalyst layer (the catalyst layer that satisfies at least one of conditions (I) and (II)) in the present embodiment. The catalyst layer in the present embodiment may be an aspect having two or more layers with the same composition or different compositions.

Even in a case where the catalyst layer is two or more layers, the thickness of the catalyst layer in the present embodiment is, as described above, preferably 0.1 to 5 µm and more preferably 0.5 to 3 µm.

In the present embodiment, the elements that configure the catalyst layer, that is, the ruthenium element, the iridium element, and arbitrarily the other elements preferably have uniformly dispersed in the catalyst layer. Even in a case where all of these uniformly disperse, there is a tendency that each of, particularly, ruthenium, which is the main catalyst, iridium, which imparts durability, and the other elements, which have a variety of other functions, develops performance at a higher efficiency and the electrode for electrolysis realizes high durability while maintaining a low overpotential.

In the present embodiment, in addition to controlling the crystallite size to the above-described range, for example, when the catalyst layer contains the metal element M, the molar ratio of the ruthenium element to the iridium element is adjusted to the preferable range, a calcining temperature to be described below is adjusted to a preferable range, and/or the like, there is a tendency that at least the ruthenium element and the iridium element are likely to more uniformly disperse in the catalyst layer.

The distribution of the elements in the catalyst layer can be measured using the energy-dispersive X-ray spectroscopy or the like. In a case where the catalyst layer is two or more layers, the ruthenium element, the iridium element, and arbitrarily the other elements that are contained in the catalyst layer in the present embodiment may have uniformly dispersed in at least one layer thereof or the ruthenium element, the iridium element, and arbitrarily the other elements that are contained in the catalyst layer in the present embodiment may have uniformly dispersed in all of the catalyst layers.

### (Method for Manufacturing Electrode for Electrolysis)

Next, one example of a method for manufacturing the electrode for electrolysis of the present embodiment will be described in detail.

The electrode for electrolysis of the present embodiment can be manufactured by, for example, forming the catalyst layer containing the ruthenium element, the iridium element, and arbitrarily the other elements on the conductive substrate. Here, the conductive substrate may be a material on which the above-described surface area-increasing treatment has been performed. In addition, the catalyst layer is preferably formed by a pyrolysis method. In the manufacturing method where the pyrolysis method is used, a coating solution containing a mixture of compounds containing the above-described elements (precursors) is applied onto the conductive substrate and then calcined under an oxygen-containing atmosphere, and the components in the coating solution are pyrolyzed whereby the catalyst layer can be formed. According to this method, it is possible to manufacture the electrode for electrolysis with high productivity and a smaller number of steps than those of conventional manufacturing methods.

The pyrolysis mentioned herein means decomposition of a metal salt or the like, which is a precursor, into a metal oxide or metal and a gaseous substance by calcining under an oxygen-containing atmosphere. A decomposition product to be obtained can be controlled with a metal species or the kind of a metal salt that is contained in the precursor that is blended into the coating solution as a starting material, an atmosphere in which the pyrolysis is performed, or the like. Normally, under the oxygen-containing atmosphere, there is a tendency that a number of metals are likely to form an oxide. In an industrial manufacturing process of the electrode for electrolysis, it is normal that pyrolysis is performed in the air. In the present embodiment as well, the range of the oxygen concentration during the calcination is not particularly limited, and the pyrolysis can be performed in the air. In the present embodiment, the air or oxygen may be circulated into a calcining furnace as necessary.

As a preferable aspect of the method for manufacturing the electrode for electrolysis of the present embodiment, the method preferably has a step of preparing a coating solution containing a ruthenium compound, an iridium compound, and arbitrarily, a compound containing the other elements, a step of forming a coated film by applying the coating solution onto at least one surface of the conductive substrate, and a step of forming the catalyst layer by calcining the coated film under an oxygen-containing atmosphere. The ruthenium compound, the iridium compound, and the compound containing the other elements correspond to the precursors containing the metal elements that are contained in the catalyst layer in the present embodiment. An electrode for electrolysis having a uniform catalyst layer can be manufactured by the above-described method.

In the compounds that are contained in the coating solution, the ruthenium compound and the iridium compound may be oxides, but are not limited thereto and may be, for example, metal salts or the like. While not limited to the followings, examples of these metal salts include chlorides, nitrates, dinitrodiammine complexes, nitrosyl nitrates, sulfates, acetates, and metal alkoxides. While not limited to the followings, examples of the metal salt of the ruthenium compound include ruthenium chloride, ruthenium nitrate, and the like. While not limited to the followings, examples of the metal salt of the iridium compound include iridium chloride, iridium nitrate, and the like. In the present embodiment, the metal salts of the ruthenium compound and the iridium compound are preferably nitrates from the viewpoint of durability.

In the compounds that are contained in the coating solution, the compound containing the other elements may be an oxide, but is not limited thereto. When cobalt is used as an example, the compound containing the other elements may be an oxo acid of cobalt, a salt thereof, a chloride of cobalt, a nitrate of cobalt or the like. While not limited to the followings, examples of a counter cation in the oxo acid salt include Li⁺, Na⁺, K⁺, Ca²⁺, and the like. Specific examples of such a compound are not limited to the followings, examples of the oxo acid and the salt thereof include lithium cobaltate, sodium cobaltate, and the like, examples of the chloride include cobalt chloride and the like, and examples of the nitrate include cobalt nitrate and the like.

The compounds are selected as appropriate depending on a desired metal element ratio in the catalyst layer and used. While not limited to the following, the coating solution may further contain, for example, a metal compound containing a metal element such as tantalum, niobium, tin, platinum, or rhodium, an organic compound containing a metal element such as tantalum, niobium, tin, platinum, or rhodium, or the like. The coating solution is preferably a liquid-form composition containing the above-described compound group dissolved or dispersed in an appropriate solvent. The solvent in the coating solution that is used herein can be selected depending on the kind of the above-described compound. For example, water, alcohols such as butanol, and the like can be used. The total compound concentration in the coating solution is not particularly limited, but is preferably 10 to 150 g/L from the viewpoint of appropriately controlling the thickness of the catalyst layer.

A method for applying the coating solution onto the conductive substrate is not limited to the followings, but it is possible to employ, for example, a dipping method in which the conductive substrate is immersed in the coating solution, a method in which the coating solution is applied to the surface of the conductive substrate with a brush, a roll method in which the conductive substrate is passed through a sponge-like roll impregnated with the coating solution, an electrostatic application method in which the conductive substrate and the coating solution are charged to opposite charges and spray atomizing is performed or the like. Among these application methods, the roll method and the electrostatic application method are preferable from the viewpoint of excellent industrial productivity. A coated film of the coating solution can be formed on at least a single surface of the conductive substrate by these application methods. It is preferable to perform a step of applying the coating solution to the conductive substrate and then drying the coated film as necessary. The catalyst layer can be more strongly formed on the surface of the conductive substrate by this drying step. The drying conditions can be selected as appropriate depending on the composition of the coating solution, the solvent species, or the like. The drying step is preferably performed at a temperature of 10°C to 90°C for 1 to 20 minutes.

The coated film of the coating solution is formed on the surface of the conductive substrate and is then calcined under an oxygen-containing atmosphere. The calcining temperature can be selected as appropriate depending on the composition of the coating solution and the solvent species. The calcining temperature is preferably 300°C to 650°C. In a case where the calcining temperature is 300°C or higher, the decomposition of the precursor such as the ruthenium compound is accelerated, and there is a tendency that it becomes easy to obtain a desired catalyst layer containing ruthenium oxide. In a case where the calcining temperature of 650°C or lower, the oxidation of the conductive substrate is prevented, and there is a tendency that the adhesion between the catalyst layer and the conductive substrate in the interface enhances. Particularly in a case where a titanium substrate is used as the conductive substrate, in consideration of the above-described tendencies, the calcining temperature is preferably set to 300°C to 650°C. In addition, the calcining time is preferably as long as possible. On the other hand, from the viewpoint of the productivity of the electrode, the calcining time is preferably adjusted so as not to become excessively long. From the above-described viewpoint, the calcining time in a single round of calcination is preferably 5 to 60 minutes.

The catalyst layer can be formed in a desired thickness by repeating each step of the application, drying, and calcination of the catalyst layer described above a plurality of times as necessary. It is also possible to further improve the stability of the catalyst layer that is extremely stable chemically, physically and thermally by further performing calcination for a long period of time as necessary after the catalyst layer is formed. The conditions of the long-term calcination are preferably for approximately 30 minutes to four hours at 400°C to 650°C.

The electrode for electrolysis of the present embodiment has a low overpotential even in the initial stage of electrolysis and enables electrolysis for a long period of time at a low voltage and a low power consumption. Therefore, the electrode for electrolysis can be used in a variety of electrolysis. In particular, the electrode for electrolysis is preferably used as an anode for chlorine generation and more preferably used as an anode for chlor-alkali electrolysis by an ion exchange membrane method.

### <Electrolyzer>

An electrolyzer of the present embodiment includes the electrode for electrolysis of the present embodiment. In this electrolyzer, the initial voltage is reduced at the time of electrolysis. A schematic cross-sectional view according to one example of the electrolyzer of the present embodiment is shown in FIG. 1.

An electrolyzer 200 includes electrolyte solutions 210, a container 220 for accommodating the electrolyte solution 210, an anode 230 and a cathode 240 immersed in the electrolyte solutions 210, an ion exchange membrane 250, and wires 260 for connecting the anode 230 and the cathode 240 to a power supply. Here, in the electrolyzer 200, a space on the anode side separated by the ion exchange membrane 250 is referred to as an anode chamber, and a space on the cathode side is referred to as a cathode chamber. The electrolyzer of the present embodiment can be used in a variety of electrolysis. Hereinafter, a case where the electrolyzer is used in the electrolysis of an alkali chloride aqueous solution will be described as a typical example thereof. As the electrolyte solutions 210 that are supplied to the electrolyzer of the present embodiment, for example, an alkali chloride aqueous solution such as a sodium chloride aqueous solution (saline solution) or potassium chloride aqueous solution having a normality (N) of 2.5 to 5.5 can be used in the anode chamber, and a diluted alkali hydroxide aqueous solution (for example, a sodium hydroxide aqueous solution, a potassium hydroxide aqueous solution, or the like) or water can be used in the cathode chamber, respectively.

As the anode 230, the electrode for electrolysis of the present embodiment can be used. As the ion exchange membrane 250, for example, a fluororesin membrane having an ion-exchange group or the like can be used. While not limited to the followings, specific examples thereof include "Aciplex" (registered trademark) F6801 (manufactured by Asahi Kasei Corporation) and the like. As the cathode 240, a cathode for hydrogen generation that is an electrode obtained by applying a catalyst onto a conductive substrate or the like can be used. As this cathode, a known cathode can be employed, and specific examples thereof include cathodes obtained by coating a nickel substrate with nickel, nickel oxide, an alloy of nickel and tin, a combination of activated carbon and an oxide, ruthenium oxide, platinum, or the like; cathodes obtained by forming a ruthenium oxide coating on a nickel wire mesh substrate; and the like.

The configuration of the electrolyzer of the present embodiment is not particularly limited and may be a monopolar type or a bipolar type. Materials that configure the electrolyzer are not particularly limited; however, titanium that is resistant to alkali chlorides and chlorine and the like are preferable as a material of the anode chamber, and nickel that is resistant to alkali hydroxides and hydrogen and the like are preferable as a material of the cathode chamber. The electrode for electrolysis (anode 230) of the present embodiment may be disposed with an appropriate gap provided between the ion exchange membrane 250 and the electrode for electrolysis or may be disposed in contact with the ion exchange membrane 250. The cathode 240 of the present embodiment may be disposed with an appropriate gap provided between the ion exchange membrane 250 and the cathode or may be a contact-type electrolyzer in which there are no gaps between the ion exchange membrane 250 and the cathode (zero gap-type electrolyzer). The electrolysis conditions of the electrolyzer of the present embodiment are not particularly limited, and the electrolyzer can be operated under known conditions. For example, it is preferable to perform electrolysis with the electrolysis temperature adjusted to 50°C to 120°C and the current density adjusted to 0.5 to 10 kA/m².

When the electrode for electrolysis of the present embodiment is applied to the electrolyzer, the electrolysis voltage in chlor-alkali electrolysis becomes lower than those in the art. Therefore, according to the electrolyzer of the present embodiment including the electrode for electrolysis, power consumption necessary for chlor-alkali electrolysis becomes low. Furthermore, the electrode for electrolysis of the present embodiment has a chemically, physically, and thermally stable catalyst layer and thus has excellent long-term durability. Therefore, according to the electrolyzer of the present embodiment including the electrode for electrolysis, the catalytic activity of the electrode is maintained to be high for a long period of time, and high-purity chlorine can be stably produced.

### Examples

Hereinafter, the present embodiment will be described in more detail based on examples. The present embodiment is not limited only to these examples.

First, each evaluation method in the examples and comparative examples will be described below.

### (Test of Chlor-alkali electrolysis by Ion exchange membrane Method)

As an electrolytic cell, an electrolytic cell equipped with an anode cell having an anode chamber and a cathode cell having a cathode chamber was prepared. An electrode for electrolysis prepared in each of the examples and the comparative examples was cut out to a predetermined size (48 × 58 mm = 0.002784 m²) to produce an electrode for test, and the electrode for test was mounted on the rib of the anode chamber of the anode cell by welding and used as an anode. As a cathode, an electrode obtained by performing the catalyst coating of ruthenium oxide on a nickel wire mesh substrate was used. First, as a current collector, a metal nickel expanded substrate was cut out to the same size as the anode and welded onto the rib of the cathode chamber of the cathode cell, a cushion mat made by weaving a nickel wire was then placed, and the cathode was disposed thereon. As a gasket, an EPDM (ethylene propylene diene) rubber gasket was used, and an ion exchange membrane was interposed between the anode cell and the cathode cell. As this ion exchange membrane, a cation exchange membrane for chlor-alkali electrolysis "Aciplex" (registered trademark) F6801 (manufactured by Asahi Kasei Corporation) was used.

In order to measure the overpotential for chlorine evolution, a platinum wire coated with PFA (tetrafluoroethylene/perfluoroalkoxyethylene copolymer) in which the coating in an approximately 1 mm portion from the tip of the platinum wire had been removed to expose platinum was tied with a polytetrafluoroethylene thread, fastened to the surface of the anode opposite to the ion exchange membrane, and used as a reference electrode. During the electrolysis test, the reference electrode is in an atmosphere saturated with the generated chlorine gas and thus exhibits the chlorine generation potential. Therefore, a value obtained by subtracting the potential of the reference electrode from the potential of the anode was evaluated as the anode overpotential for chlorine evolution . The overpotential for chlorine evolution was measured after one day from the start of the electrolysis (in Table 2, expressed as "Overpotential for chlorine evolution_start [mV]") and after 21 days from the start of the electrolysis (in Table 2, expressed as "Overpotential for chlorine evolution_end [mV]").

As the electrolysis conditions, the electrolysis was performed at a current density of 6 kA/m², brine concentration in the anode cell of 205 g/L, a NaOH concentration in the cathode cell of 32 mass%, and a temperature of 90°C. As a rectifier for electrolysis, "PAD110-32LA" (manufactured by Kikusui Electronics Corporation) was used.

Furthermore, the Ru survival rate (100 × content before electrolysis/content after electrolysis; %) in a catalyst layer in the electrode for test after the electrolysis was calculated using values obtained by the fluorescent X-ray measurement (XRF) of each metal component before and after the electrolysis. As an XRF measuring instrument, Niton XL3t-800 or XL3t-800s (trade name, manufactured by Thermo Scientific) was used. Furthermore, the Ru survival rate obtained above was divided by the molar ratio (Ir/Ru) of an iridium element to a ruthenium element in a coating solution, thereby calculating "Ru survival rate/(Ir/Ru)." The value of Ru survival rate/(Ir/Ru) serves as an index of how much of the catalyst has survived after electrolysis, and as this value becomes larger, the catalyst layer can be said to be more highly durable with a smaller amount of Ir in the evaluation.

### (Calculation of Crystallite Size)

In order to calculate the crystallite size, the X-ray diffraction measurement (XRD) of the electrode was performed. As an XRD measuring instrument, Rigaku MiniFlex600-C was used. The measurement was performed under the following conditions; the X-ray source was Cu-Kα; the incidence side solar slit was 2.5°; the divergent slit was 1.25°; the light-receiving side solar slit was 2.5°; the light-receiving slit was open; a Kβ filter was applied to the light-receiving side; the 2θ measurement range was 18° to 60°; the step width was 0.02°; the scan rate was set to 5 °/min, a sample (the above-described electrode for test that had been further cut out to 16 mm × 16 mm = 0.000256 m²) was placed on a rotating sample stage and measured while rotating the sample at a rotation speed of 60 rpm.

The crystallite size was calculated using SmarLab StudioII, which was accessory software. A profile obtained from the XRD measurement was read with SmarLab StudioII, and peak fitting was performed under conditions of a peak shape of split pseudo-Voigt function and a background type of B-spline. From a peak for which 2θ was 27° to 28.5°, the crystallite size was calculated using the following Scherrer equation. In a case where two or more peaks overlapped in the range, the crystallite size that was obtained from the higher peak was used. Since peaks derived from the (110) plane of RuO₂ and the (110) plane of IrO₂ were observed in the 2θ range of 27° to 28.5°, the physical properties of the catalyst layer were compared by extracting the crystallite sizes from the peaks in this range. Scherrer equation: Crystallite size = K × λ/(β × cosθ)
K: Scherrer constant = 0.94
λ: Cu Kα ray = 0.15418 nm
β: Half width
θ: Bragg angle

### [Example 1]

As a conductive substrate, a titanium expanded substrate having a long way dimension of mesh (LW) of 6 mm, a short way dimension of mesh (SW) of 3 mm, and a plate thickness of 1.0 mm was used. This expanded substrate was calcined in the atmosphere at 540°C for four hours, an oxide film was formed on the surface, an acid treatment was then performed in a 25 mass% sulfuric acid at 85°C for four hours, and a pretreatment for providing fine unevenness on the surface of the conductive substrate was performed.

Next, a ruthenium nitrate aqueous solution (manufactured by Furuya Metal Co., Ltd., ruthenium concentration: 100 g/L), an iridium chloride aqueous solution (manufactured by TANAKA Precious Metals, iridium concentration: 100 g/L), zinc chloride (manufactured by FUJIFILM Wako Pure Chemical Corporation, special grade), and cobalt (II) nitrate hexahydrate (manufactured by FUJIFILM Wako Pure Chemical Corporation, special grade) were mixed together such that the element ratio (molar ratio) among ruthenium, iridium, zinc, and cobalt reached 65:25:5:5, thereby obtaining a coating solution A1 that was an aqueous solution having a total metal concentration of 100 g/L.

This coating solution A1 was poured into a vinyl chloride liquid-receiving bucket, and a first EPDM sponge roll was rotated and was thereby impregnated with the coating solution 1 by soaking. A second EPDM sponge roll was disposed so as to be in contact with the upper portion of the first sponge roll. Furthermore, a PVC roll was disposed so as to be in contact with the upper portion of the second sponge roll. In addition, the conductive substrate on which the pretreatment had been performed was passed through and coated between the second EPDM sponge roll and the PVC roll. After that, the conductive substrate was dried at 50°C for 10 minutes and then calcined in the atmosphere at 400°C for 10 minutes (in Table 1, expressed as "calcining temperature (first time; °C)"). A cycle of the above-described roll coating, drying, and calcination was further repeated three times at a calcining temperature increased to 450°C (in Table 1, expressed as "calcining temperatures (second to fourth times; °C)"), and finally, the conductive substrate was further calcined at 520°C for one hour (in Table 1, expressed as "calcining temperature (PB; °C)"), thereby forming a dark brown catalyst layer on the conductive substrate and producing an electrode for electrolysis.

As a result of subjecting the electrode for electrolysis of Example 1 to the above-described XRD measurement, the crystallite size was 81 Å. In addition, as a result of subjecting the electrode for electrolysis of Example 1 to the above-described electrolysis test, the value of Ru survival rate/(Ir/Ru) was as large as 260, and the electrode for electrolysis was evaluated to have a highly durable catalyst layer with a small amount of Ir. In addition, as a result of the same test, the overpotential for chlorine evolution after one day from the start of the electrolysis was 47 mV, and the overpotential for chlorine evolution after 21 days from the start of the electrolysis was 46 mV, both of which were on sufficiently low levels.

### [SEM/EDX Analysis]

A cross section of the catalyst layer was also analyzed (SEM/EDX-analyzed) using the energy-dispersive X-ray spectroscopy. As an analysis target, in the catalyst layer in the electrode for electrolysis, a catalyst layer corresponding to a position that served as a conducting surface during the above-described chlor-alkali electrolysis was regarded as the target, furthermore, a portion where the peeling of the catalyst or the adhesion of an impurity such as an organic substance was not observed was selected, and a cross section of the catalyst layer in the portion was regarded as the analysis target. From the obtained image, it was confirmed that the ruthenium element and the iridium element had dispersed in the same manner in the catalyst layer and had been uniformly mixed together. The details of the analysis conditions were set as described below.
Instrument: Regulus SU8220 (manufactured by Hitachi High-Tech Corporation) and FlatQUAD5060 (manufactured by Bruker)
Observation conditions (SEM): Accelerating voltage of 10 kV, SE (U) detector, emission current of 10 uA, first condenser lens setting of 5, probe current setting of norm, working distance of 11 mm
Observation conditions (EDX): Cumulative time of 1,000 s, duel time of 8 µs, window type of 1 + 2 µm Mylar

The specific operation of the analysis was performed as described below.
(1) The magnification on a SEM control screen was set to 10,000 times.
(2) The image resolution on the EDX side was set to 1600 × 1200 pixels.
(3) After "fixed" was selected for the map region of the EDX signal acquisition operation, the map width was set to 800 points, the map height was set to 600 points, and EDX measurement was performed.
(4) After "Tile size 2 × 2" was selected for the EDX measurement results, quantitative analysis was performed in an interactive mode.
(5) Deconvolution setting during the quantitative analysis was "Series fit", and "P/B-ZAF" was selected for the quantitative analysis model.
(6) As elements during the quantitative analysis, "ruthenium, iridium, zinc, and cobalt" were selected, and an EDX net total image was obtained. During the present quantitative analysis, the conditions were adjusted as appropriate so that the analysis target elements could be changed depending on the kinds of elements constituting the catalyst layer.

### [Calculation of Cosine Similarity]

In order to exclude a region containing neither ruthenium nor iridium in the analysis image, pixels having a brightness value of 50 or more in at least one of the EDX images of ruthenium and iridium were regarded as an analysis region. This analysis region was defined as ROI (Region Of Interest), and the coincidence degree in distribution between Ru and Ir in ROI was calculated by the following method.

In the EDX image of each of ruthenium and iridium, the pixels on ROI was expanded into one-dimensional vectors, and the cosign similarity of two vectors was calculated. At that time, each pixel position corresponds to each dimension of the vector, and the brightness value of each pixel corresponds to an element having the corresponding dimension. As this cosign similarity shows a value closer to one, it means that the EDX images of Ru and Ir become more similar, that is, Ru and Ir have been distributed in the same manner in the catalyst layer and have been more uniformly mixed together.

The cosign similarity of Example 1 obtained as described above was 0.97, which suggested that ruthenium and iridium had been distributed in the same manner in the catalyst layer.

### [Evaluation Results]

As described above, the electrode for electrolysis of Example 1 was evaluated to be excellent in terms of durability and electrolysis performance since the crystallite size was controlled to be within a predetermined range. In addition, the results of the SEM/EDX analyses of ruthenium and iridium suggested that, when at least one of condition (I) and condition (II) in the present embodiment is satisfied, there is a tendency that the ruthenium element and the iridium element are distributed in the same manner in the catalyst layer and are uniformly mixed together.

### [Examples 2 to 23 and Comparative Examples 1 to 6]

Electrodes for electrolysis were produced in the same manner as in Example 1 except that the composition of the coating solution A1 was changed so that the catalyst layers became the metal compositions shown in Table 1, the calcining temperature (first time; °C) was changed to values shown in Table 1, the calcining temperature (second to fourth times; °C) was changed to values shown in Table 1, and/or the calcining temperature (PB; °C) was changed to values shown in Table 1.

The configuration of the electrode for electrolysis (the metal composition of the coating solution used to form the catalyst layer) produced in each of Examples 1 to 23 and Comparative Examples 1 to 6 and a variety of evaluation results of the electrode for electrolysis are shown in Tables 1 and 2. The unit of numerical values of the metal compositions in the tables is "mol%", and the numerical values mean the mole percentage (preparation ratio) relative to all of the metal elements that were contained in the catalyst layer. In addition, the values (Ru/Ir) of ruthenium element/iridium element and the values (M/Ru) of metal element M/ruthenium element are values calculated from the preparation ratios.

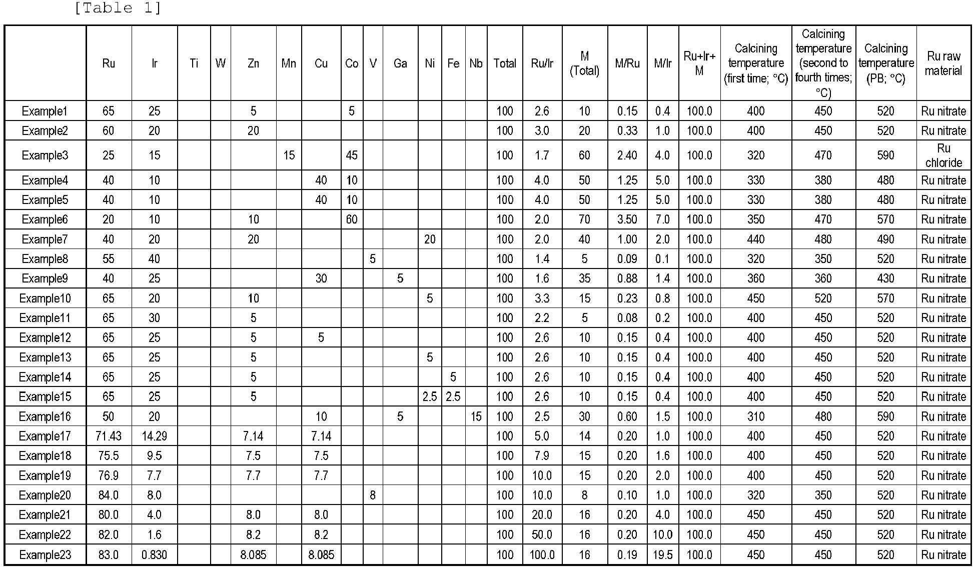

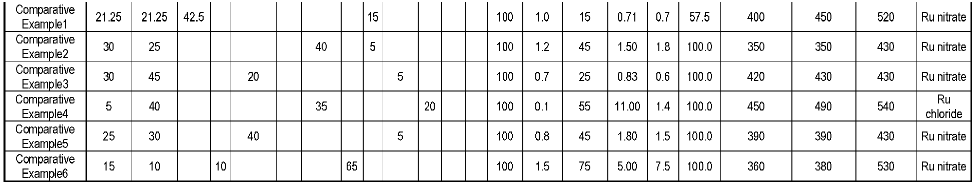

**[Table 2]**

| | Crystallite size (Å) | Ru survival rate (%) | Ru survival rate /(Ir/Ru) | Overpotential for chlorine evolution _start[mV] | Overpotential for chlorine evolution _end[mV] |
|---|---|---|---|---|---|
| Example1 | 81 | 100 | 260 | 47 | 46 |
| Example2 | 54 | 94 | 282 | 31 | 48 |
| Example3 | 56 | 89 | 148 | 164 | 124 |
| Example4 | 58 | 86 | 344 | 29 | 28 |
| Example5 | 62 | 74 | 296 | 24 | 28 |
| Example6 | 63 | 69 | 138 | 51 | 56 |
| Example7 | 65 | 89 | 177 | 31 | 34 |
| Example8 | 68 | 100 | 138 | 29 | 33 |
| Example9 | 70 | 88 | 141 | 29 | 31 |
| Example10 | 76 | 94 | 307 | 36 | 41 |
| Example11 | 76 | 98 | 213 | 38 | 41 |
| Example12 | 79 | 96 | 250 | 36 | 38 |
| Example13 | 81 | 100 | 260 | 41 | 41 |
| Example14 | 86 | 99 | 257 | 34 | 37 |
| Example15 | 88 | 97 | 253 | 40 | 36 |
| Example16 | 94 | 90 | 224 | 65 | 47 |
| Example17 | 70 | 97 | 484 | 34 | 34 |
| Example18 | 77 | 91 | 722 | 34 | 33 |
| Example19 | 71 | 69 | 693 | 46 | 43 |
| Example20 | 137 | 85 | 893 | 34 | 34 |
| Example21 | 75 | 81 | 1620 | 30 | 30 |
| Example22 | 88 | 60 | 3000 | 29 | 29 |
| Example23 | 175 | 47 | 4700 | 31 | 31 |
| Comparative Example1 | 106 | 97 | 97 | 32 | 32 |
| Comparative Example2 | 187 | 74 | 88 | 26 | 29 |
| Comparative Example3 | 39 | 90 | 60 | 30 | 32 |
| Comparative Example4 | 40 | 48 | 6 | 44 | 44 |
| Comparative Example5 | 41 | 68 | 56 | 28 | 31 |
| Comparative Example6 | 46 | 26 | 39 | 36 | 38 |

The electrodes for electrolysis of Examples 8 and 12 were also subjected to the same SEM/EDX analysis as in Example 1. As a result, the cosine similarity of Example 8 was 0.94, and the cosine similarity of Example 12 was 0.93. From these results, it was confirmed that, in Examples 8 and 12 as well, similar to Example 1, the ruthenium element and the iridium element had been uniformly distributed in the catalyst layer.

Separately, the electrode for electrolysis of Comparative Example 1 was subjected to the same SEM/EDX analysis as in Example 1. As a result, the cosine similarity of Comparative Example 1 was 0.89. From this result, it was confirmed that, in Comparative Example 1, the distribution states of the ruthenium element and the iridium element in the catalyst layer were different and at least one of the ruthenium element and the iridium element was unevenly distributed in the catalyst layer.

These results suggested that, when at least one of condition (I) and condition (II) in the present embodiment is satisfied, there is a tendency that the ruthenium element and the iridium element are uniformly distributed in the catalyst layer.

The present application claims priority to Japanese Patent Application (Japanese Patent Application No. 2022-098944), filed June 20, 2022, and Japanese Patent Application (Japanese Patent Application No. 2023-062983), filed April 7, 2023, the contents of which are incorporated herein by reference.

### Reference Signs List

- 200: Electrolyzer for electrolysis
- 210: Electrolyte solution
- 220: Container
- 230: Anode (electrode for electrolysis)
- 240: Cathode
- 250: Ion exchange membrane
- 260: Wire

## Claims

1. An electrode for electrolysis, comprising:
a conductive substrate; and
a catalyst layer disposed on a surface of the conductive substrate,
wherein at least one of the following conditions (I) and (II) is satisfied:
(I) the catalyst layer comprises a ruthenium element and an iridium element, and a crystallite size is 50 Å or more and 100 Å or less, the crystallite size being calculated from a peak observed in a 2θ range of 27° or more and 28.5° or less in an XRD spectrum, the XRD spectrum being obtained by subjecting the catalyst layer to X-ray diffraction measurement, and
(II) the catalyst layer comprises (i) a ruthenium element, (ii) an iridium element, and (iii) at least one kind of metal element M selected from the group consisting of W, Zn, Mn, Cu, Co, V, Ga, Ta, Ni, Fe, Mo, Nb and Zr, in the catalyst layer, a molar ratio of the ruthenium element to the iridium element, in terms of ruthenium element/iridium element, is 1.4 or more, and a molar ratio of the metal element M to the ruthenium element, in terms of metal element M/ruthenium element, is 0.06 or more and 3.5 or less.

2. The electrode for electrolysis according to Claim 1, wherein the condition (II) is satisfied.

3. The electrode for electrolysis according to Claim 2, wherein a crystallite size is 50 Å or more and 100 Å or less, the crystallite size being calculated from a peak observed in a 2θ range of 27° or more and 28.5° or less in an XRD spectrum, the XRD spectrum being obtained by subjecting the catalyst layer to X-ray diffraction measurement.

4. The electrode for electrolysis according to Claim 2, wherein the metal element M comprises Zn, Mn, Cu, Co, V, Ga, Ni, Fe, and/or Nb.

5. The electrode for electrolysis according to Claim 1, wherein the condition (I) is satisfied.

6. The electrode for electrolysis according to Claim 5, wherein, in the catalyst layer, a molar ratio of the ruthenium element to the iridium element, in terms of ruthenium element/iridium element, is 1.4 or more.

7. The electrode for electrolysis according to Claim 5, wherein the catalyst layer comprises the metal element M, and, in the catalyst layer, a molar ratio of the metal element M to the ruthenium element, in terms of metal element M/ruthenium element, is 0.05 or more and 3.5 or less.

8. The electrode for electrolysis according to Claim 7, wherein the metal element M comprises Zn, Mn, Cu, Co, V, Ga, Ni, Fe, and/or Nb.

9. An electrolyzer comprising:
the electrode for electrolysis according to any one of Claims 1 to 8.
